# EUROPEAN PATENT APPLICATION

(11) **EP 1 703 507 A1**
(43) Date of publication of application: **20.09.2006**
(21) Application number: 04820660.1
(22) Date of filing: 26.11.2004
(51) Int. Cl.: G11B 20/12, G11B 20/10, G11B 27/00, G11B 7/004, G11B 7/007, G06F 3/06

(54) **RECORDING MEDIUM, RECORDING APPARATUS, REPRODUCING APPARATUS, RECORDING METHOD, AND REPRODUCING METHOD**

(30) Priority: 18.12.2003 JP 2003420675
(71) Applicant: SONY CORPORATION, Tokyo 141-0001 (JP)
(72) Inventor: NISHINO, Masatoshi c/o SONY CORPORATION, Shinagawa-ku, Tokyo (JP); HORIGOME, Junichi c/o SONY CORPORATION, Shinagawa-ku, Tokyo (JP); CHIBA, Takayoshi c/o SONY CORPORATION, Shinagawa-ku, Tokyo (JP); TADA, Hideo c/o SONY CORPORATION, Shinagawa-ku, Tokyo (JP); YAMAGUCHI, Shigeo c/o SONY CORPORATION, Shinagawa -ku, Tokyo (JP); NAGATA, Masayoshi c/o SONY CORPORATION, Shinagawa-ku, Tokyo (JP); TONE, Yasuo c/o SONY CORPORATION, Shinagawa-ku, Tokyo (JP)
(74) Representative: Müller - Hoffmann & Partner
(86) International application number: PCT/JP2004/017989
(87) International publication number: WO 2005/062304

(57) **Abstract**

A recording medium as a physically rewritable disk is appropriately used as a write-once type. In order to use the rewritable media in write-once applications, the recording medium in the data structure thereof includes, in a second data unit (an ECC block of 64 Kbytes), flag information WF1-WF4 indicating whether a first data unit (2 Kbytes) is stored. More specifically, whether a plurality of first data units (a sector handled by a host) has been recorded in the second data unit (a recording unit sector on the recording medium) is directly indicated. When an access request is issued in emulation in a disk drive device, the flag information is referenced, and the disk drive device determines whether one of writing or reading of the first data unit as a target responsive to a command is enabled.

## Description

### Technical Field

The present invention relates to a recording medium such as an optical disk, a recording apparatus, a playback apparatus, a recording method, and a playback method.

### Background Art

In the field of optical disks, disks complying with a variety of standards, including CD (Compact Disk), DVD (Digital Versatile Disk), Blu-Ray Disk have been developed. From the standpoint of function, there are two types of recording disks, namely, playback only disk, and recordable disk, within the category of disks of the variety of standards. The recordable disks are divided into write-once disks permitting one-time writing and rewritable disks permitting rewriting.

In the CD standard, CD-DA (for audio CD) and CD-ROM are playback-only disks. CD-R is known as a write-once disk, and CD-RW is known as a rewritable disk.

The playback only disk with data thereof represented by emboss pit is physically impossible to rewrite.

A typical type of the write-once disk employs a color change layer as a recording layer. Laser irradiation on the color change layer causes color change, thereby producing pits on the recording layer.

One type known as the rewritable disk employs a phase-change recording layer. Laser irradiation on the recording layer causes phase-change pits to be produced (written again) on the recording layer.

The rewritable disk permits overwriting by multiple times. The rewritable disk permits data to be flexibly stored, thereby assuring the ease of use.

The write-once disk permits only one-time data writing. However, the feature of one-time data writing can become advantageous as media in data storage applications. For example, the write-once disk is appropriate for storing important data that needs protection from data tampering.

The write-once disk and the rewritable disk are different in physical structure (the color change layer and the phase change layer), and these disks are distinctly differentiated. However, there is a need for performing write-once type recording on the rewritable disk.

The write-once writing can be performed on the rewritable disk if a recording apparatus (a disk drive device) controls a recording operation by software. More specifically, to handle a rewritable disk as a loaded write-once disk, a firmware program that inhibits data writing (data overwriting) on a zone bearing written data may be installed on the disk drive device.

Data transfer between a disk drive device and a host apparatus such as a computer is now considered.

The disk drive device connected to the host apparatus, such as a computer, performs recording and playback operations in response to a write command and a read command from the host apparatus. With an OS (Operating System) or an application, the host apparatus requests a recording operation or a playback operation, thereby transmitting the write command and the read command to the disk drive device via a device driver.

The unit of data writing on the disk drive device can be different from the unit of write data the host apparatus transfers together with the write request. For example, the sector size as a write unit on known disks is typically 512 bytes. As the capacity of the disks increases, the sector size becomes diversified to 1 Kbytes, 2 Kbytes, 4 Kbytes,... For example, a disk having a 64 Kbyte sector structure has been developed.

The sector size recognized on the host apparatus is now assumed to be defined as 512 bytes, and a disk drive device compatible with a 4 Kbyte sector disk is assumed to be connected to the host apparatus. The host apparatus places an access request (write command/read command) for writing or reading by 512 byte unit. The disk drive device accesses the disk by a unit of 4 Kbyte sector containing a target 512 byte sector. To perform this operation, an address conversion process and a process for data subsequent to and prior to target sector data responsive to the command must be performed.

In the case when sector size of the storage disk is so large as in this example, an access process with a small sector size compatible with a diversity of file systems of the host apparatus is referred to as an emulation. The emulation is carried out in a diversity of systems.

A technique of emulation is disclosed in Japanese Unexamined Patent Application Publication No. 2001-175419, for example.

An emulation process in a write-once recording operation performed on the rewritable disk is now considered.

When a rewritable disk is used for write-once applications, written data must be protected from overwriting in response to a command from the host apparatus even though the rewritable disk is physically data rewritable. In response to a write command to write data on a zone having data written thereon, the disk drive device must return, as a write-once type, an error indicating that the zone is write-disabled.

To this end, the disk drive device needs to determine whether each physical sector is data recorded or data unrecorded on the disk. During the emulation, the host apparatus generates an access command with a sector unit smaller than the physical sector of the disk. In the physical sector, the data recorded zone and the data unrecorded zone must be clearly discriminated from each other.

During the recording for emulation, the sector data of the write operation is performed by the unit of physical sector on the disk even when only sector data having a size smaller than the physical sector of the disk is recorded. In a zone on the disk, determined as being unrecorded, invalid data is written, for example. With this operation, even if a playback signal is detected by simply playing back the physical sector, it becomes difficult to identify the zone having valid data written thereon (the zone that must be protected from overwriting in the write-once application). In view of this background, there is a need for a technique that clearly identifies the data recorded zone and the data unrecorded zone, namely, determines whether the valid data has been recorded or not.

### Disclosure of Invention

It is an object of the present invention to provide a recording apparatus and a playback apparatus, both of which perform an appropriate operation in an emulation when a physically rewritable recording medium is used as a write-once type.

A recording medium of the present invention having a recording layer in a data rewritable physical structure set in a write-once mode that permits data to be written one time only, includes, in a data structure recorded onto the recording layer, a second data unit, as a write unit, containing a plurality of first data units with each first data unit containing main data of a predetermined number of bytes, and flag information representing whether the recording of the first data unit is complete.

The type information, recorded as physically unrewritable playback only information, indicates that the recording medium indicates a write once only mode.

The second data unit is an error correction block unit including the plurality of first data units, the flag information corresponding to each first data unit, and error correction information.

A recording apparatus of the present invention for a recording medium, includes write means for writing data onto the recording medium according to the second data unit, determining means for checking the flag information in response to a write request to write the main data according to the first data unit in order to determine whether a zone of the first data unit responsive to the write request has data recorded thereon, and record control means for generating write data of the second data unit having the flag information thereof updated, the second data unit containing the first data unit responsive to the write request and controlling the write means to write the data if the determining means determines that the zone of the first data unit responsive to the write request remains unrecorded, or for controlling the write means not to write the data in response to the write request if the determining means determines that the zone of the first data unit responsive to the write request has data recorded thereon.

The second data unit is the error correction block unit. When a data write operation is performed in response to the write request as a result of determination that the zone of the first data unit responsive to the write request remains unrecorded, the record control means generates the write data of the second data unit containing the main data of the first data unit responsive to the write request, main data recorded according to the first data unit within the second data unit, dummy data to be recorded in the zone of the first data unit unrecorded within the second data unit, and the flag information updated to indicate that the first data unit responsive to the write request is recorded, and error correction data.

A playback apparatus includes read means for reading data from the recording medium, determining means for checking the flag information in response to a read request to read the main data according to the first data unit in order to determine whether a zone of the first data unit responsive to the read request has data recorded thereon, and playback control means for playing back and outputting data of the first data unit responsive to the read request if the determining means determines that the zone of the first data unit responsive to the read request has data recorded thereon, or for controlling the read means not to perform the playback and output process responsive to the read request if the determining means determines that the zone of the first data unit in response to the write request remains unrecorded.

A recording method of the present invention includes a determination step of checking the flag information in response to a write request of main data of the first data unit in order to determine whether a zone of the first data unit responsive to the write request has data recorded thereon, and a write step of performing data writing by generating write data of the second data unit with the flag information thereof updated, containing the first data unit responsive to the write request if it is determined in the determination step that the zone of the first data unit responsive to the write request remains unrecorded, or an error processing step of performing an error process without performing data writing responsive to the write request if it is determined in the determination step that the zone of the first data unit responsive to the write request has data recorded thereon.

A playback method of the present invention includes a determination step of checking the flag information in response to a read request of main data of the first data unit in order to determine whether a zone of the first data unit responsive to the read request has data recorded thereon, and a playback and output step of playing back and outputting data of the first data unit responsive to the read request if it is determined in the determination step that the zone of the first data unit responsive to the read request has data recorded thereon, or an error processing step of performing an error process without the playback and output step being performed if it is determined in the determination step that the zone of the first data unit responsive to the write request remains unrecorded.

In accordance with the present invention, the recording medium has, in the data structure thereof, the flag information, in the second data unit, indicating whether the first data unit has been recorded in the second data unit, to appropriately use the rewritable media in a write-once mode. More specifically, whether the plurality of first data units (a sector handled on a host side) contained in the second data unit (a recording unit sector on a recording medium side) have been recorded or not is directly indicated. In response to an access request as an emulation, each of the recording apparatus and the playback apparatus can determine a write/read enabled status and a write/read disabled status for the first data unit as a target of a command by simply referencing the flag information.

In accordance with the present invention, the recording medium has, in the data structure thereof, the flag information, in the second data unit, indicating whether the first data unit has been recorded in the second data unit. The flag information thus indicates whether valid data has been recorded on each first data unit. In response to a write access and a read access in the emulation, each of the recording apparatus and the playback apparatus checks the flag information, thereby performing an appropriate process in a write-once mode.

More specifically, the recording apparatus performs a recording operation on an unrecorded zone as an action responsive to a write command, and correctly performs a process not to overwrite recorded data. When the recording apparatus performs a recording operation, the flag information is updated for the first data unit bearing valid data written thereon in order to keep correct flag information. The flag information directly indicates whether valid data has been recorded within the second data unit, in other words, whether the zone is permitted to accept the writing of new data.

The playback apparatus reliably performs playback and transfer operations by determining based on the flag information whether the valid data has been recorded. In response to a read command, the playback apparatus reproduces and outputs a playback signal if the flag information indicates that the valid data has been recorded on the zone of the first data. If the flag information indicates that no valid data has been recorded, the playback apparatus performs an error process without outputting the playback signal even if dummy data is recorded on the zone of the first data unit requested by the read command.

### Brief Description of the Drawings

Fig. 1 is a block diagram illustrating a recording apparatus in accordance with one embodiment of the present invention.
Fig. 2 illustrates a 64 Kbyte ECC block in accordance with the embodiment of the present invention.
Fig. 3A and 3B illustrate a 64 Kbyte block and a written flag in accordance with the embodiment of the present invention.
Fig. 4 is a flowchart of a process at disk insertion in accordance with the embodiment of the present invention.
Fig. 5 is a flowchart of a process in response to a write command in accordance with the embodiment of the present invention.
Fig. 6 is a flowchart of a process in response to a read command in accordance with the embodiment of the present invention.
Fig. 7 illustrates a 4 Kbyte ECC block in accordance with the embodiment of the present invention.
Fig. 8 illustrates an area structure of a disk.
Fig. 9 illustrates a PFI.

### Best Mode for Carrying Out the Invention

A recording and playback apparatus (disk drive device) working with optical disks including a rewritable disk having a phase change recording layer is described below as one embodiment of the present invention in the order listed as below.
- 1.: Area structure of the disk
- 2.: Structure of the disk drive device
- 3.: Structure of an ECC block
- 4.: Recording and playback operations in WO application
- 5.: Modifications

### 1. Area structure of the disk

The embodiment of the present invention is applicable to a recording apparatus, a playback apparatus, a recording method, and a playback method, each compatible with disk media including a rewritable disk in particular, the disk media complying with a variety of standards including CD standard, DVD standard, and Blu-Disk standard. For simplicity of explanation, the area structure of the disk, wobble format, and data format will be described for exemplary purposes only, but the present invention is not limited to disk media format to be discussed later.

The disk medium operating in the embodiment is a rewritable disk having a physical phase change recording layer. A groove is formed in a wobble fashion on the disk. The wobbling of the groove records address and a diversity of management information (physical information of the disk). Information recorded by the wobbling groove is referred to as ADIP (address in pre-groove). The ADIP information is represented by the wobbling groove, and is playback only information impossible to rewrite.

When a disk is loaded into the disk drive device, information unique to the disk is read from the ADIP information engraved in the wobbling groove on the recording surface of the disk. The disk drive device thus recognizes a standard of the disk, a type of the disk (ROM type, a rewritable type, a write-once type, etc.), a data zone structure, recommended operating values, etc. By recognizing these pieces of information, the disk drive device can perform appropriate recording and playback operations.

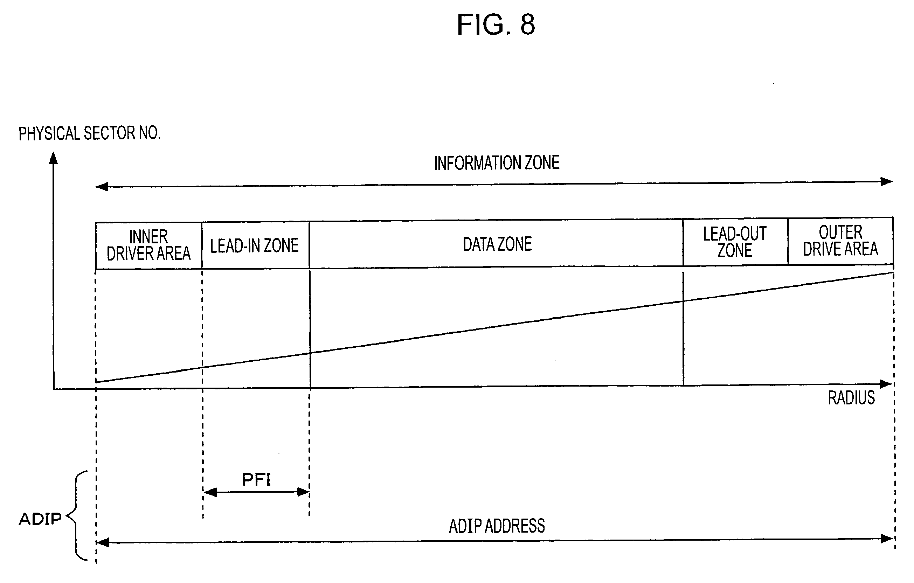

Fig. 8 illustrates an area structure (data layout) of the disk.

Fig. 8 illustrates an information zone in a logical data layout arranged from inner circle to outer circle in a radial direction of the disk. The information zone stores all information required to assure data compatibility in recording and playback of the data.

The information zone is composed of the following five major areas.
- Inner drive area
- Lead-in zone (also referred to as a lead-in area)
- Data zone (also referred to as a data area)
- Lead-out zone (also referred to as a lead-out area)
- Outer drive area

The inner drive area and the outer drive area are areas (a playback only apparatus cannot access) for the recording apparatus only. When data is recorded onto the disk, the power of a laser for recording must be adjusted to produce a correct recording marks. To this end, an area zone for use in test recording to determine optimum recording conditions and an area for recording management information relating to the recording conditions are formed in each of the inner drive area and the outer drive area.

A physical number sector (PSN) is provided as absolute position information on the disk.

As shown, the physical number increases along the radial direction of the disk from a disk inner circle to a disk outer circle.

User data is mainly written on the data zone, and the management information is written on the lead-in zone. Dummy data is written in the lead-out zone to maintain compatibility with a playback-only disk. The management information, substantially identical to that written on the lead-in zone, is sometimes written on the lead-out zone.

The entire information zone is available for data writing, and has the wobbling groove as a recording track. An unrecorded area without pits (phase change pit marks) is properly reached by properly tracing the groove during recording.

The ADIP information is recorded by wobbling the groove. The physical sector number PSN is recorded as an ADIP address throughout the information zone.

Recorded as the ADIP information are physical format information called PFI (physical format information) in addition to the ADIP address information. As shown, the PFI is repeatedly recorded as the ADIP information at the location of the lead-in zone.

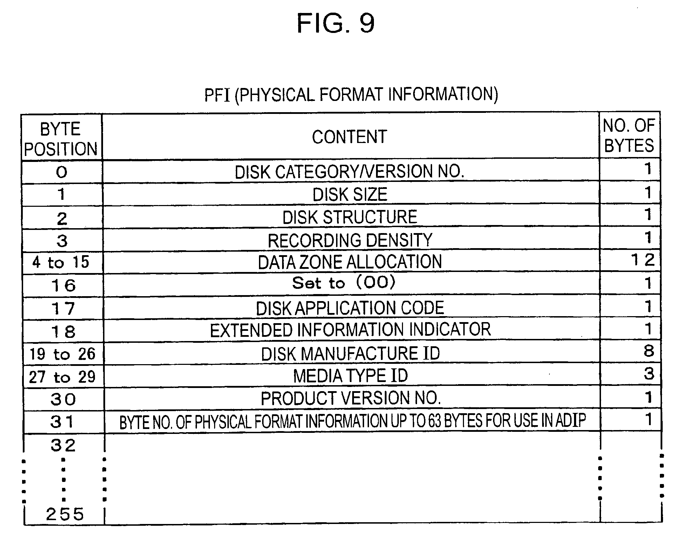

Fig. 9 illustrates the content of the PFI. The PFI contains, in predetermined byte positions thereof, a variety physical format information such as disk category/version number, disk size, disk structure, a recording density, data zone allocation, disk application code, extended information indicator, disk manufacture ID, media type ID, ...

The PFI thus provides a variety of information relating to the disk, such as a disk type, size, zone structure, linear velocity information during recording and playback operations.

### 2. Structure of the disk drive device

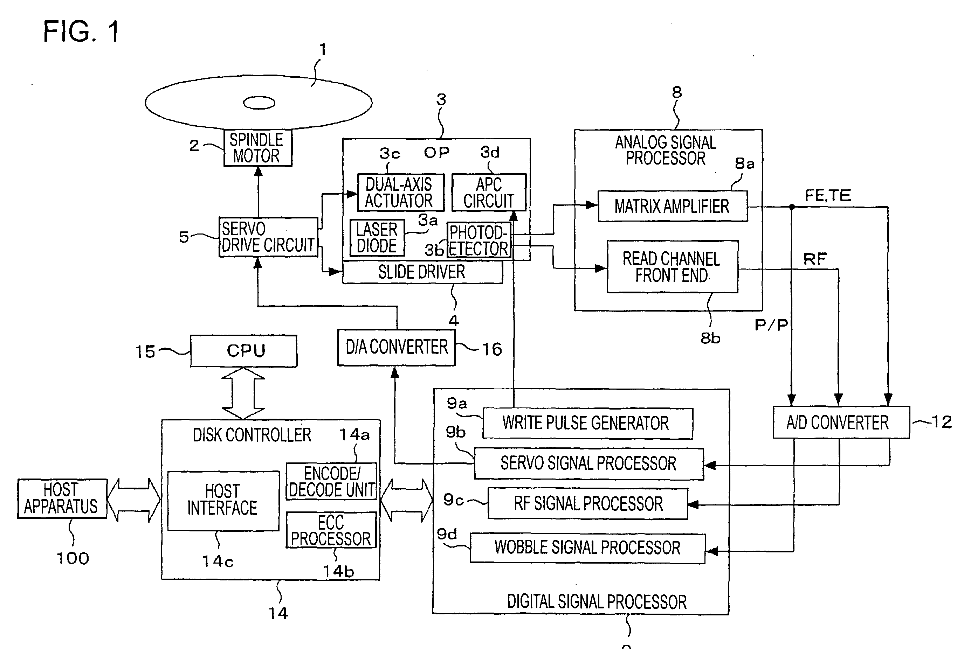

The structure of the disk drive device is described below with reference to Fig. 1.

The disk 1 is a rewritable disk (phase change disk) having the above-referenced structure. The disk drive device is compatible with a ROM disk (emboss pit disk) and a write-once disk (color change disk), each in compliance with the same standard.

The disk 1, mounted on an unshown turntable, is rotated at a constant linear velocity (CLV) or a constant angular speed (CAV) during recording or playback operation. An optical pickup 3 reads data recorded on the disk 1 in the form of emboss pits, color change pits, or phase change pits, and the ADIP information recorded in the wobbling groove.

The optical pickup 3 includes a laser diode 3a serving as a laser light source, a photodetector 3b for detecting reflected light, a dual-axis actuator 3c for supporting an objective lens serving as an output terminal of a laser light beam, an APC circuit 3d for controlling the output of the laser light beam from the laser diode 3a, and an optical system, although not shown, for directing the laser light beam to the recording surface of the disk via the objective lens and guiding the reflected light to the photodetector 3b.

The dual-axis actuator 3c movably supports the objective lens in a tracking direction and a focusing direction.

The whole optical pickup 3 is movably supported by a slide driver 4 in a disk radial direction.

The information born by the light reflected from the disk 1 is detected and converted by the photodetector 3b into an electrical signal responsive to the amount of light, and the electrical signal is then supplied to an analog signal processor 8.

A matrix amplifier 8a in the analog signal processor 8 performs a matrix calculation on a signal of each light receiving unit of the photodetector 3b. The matrix amplifier 8a generates a focus error signal FE and a tracking error signal TES for servo control. The matrix amplifier 8a also generates a push-pull signal P/P as information of the wobbling groove.

A read channel front end 8b in the analog signal processor 8 generates a playback RF signal.

The RF signal, the focus error signal FE, the tracking error signal TES, and the push-pull signal P/P are converted into respective digital signals by an A/D signal processor 12, and the digital signals are input to a digital signal processor 9.

The digital signal processor 9 includes a write pulse generator 9a, a servo signal processor 9b, an RF signal processor 9c, and a wobble signal processor 9d.

The push-pull signal P/P, generated by the matrix amplifier 8a, and then A/D converted, is decoded by the wobble signal processor 9d to extract the ADIP information. The address and physical format information, acquired as the ADIP information, are supplied to a CPU 15 via a disk controller 14.

The servo signal processor 9b receives the focus error signal FE, and the tracking error signal TES, and also receives rotating speed information extracted through a PLL process by the RF signal processor 9c. The servo signal processor 9b then generates servo drive signals for focusing, tracking, sliding, and spindle, thereby performing a servo operation.

The servo drive signals are supplied to a servo drive circuit 5 via a D/A converter 16. In response to the focus/tracking servo drive signals, the servo drive circuit 5 drives the dual-axis actuator 3c for focus servo and tracking servo operations. In response to a slide drive signal, the servo drive circuit 5 drives a slide driver 4 to move the optical pickup 3. In response to the spindle servo drive signal, the servo drive circuit 5 causes the spindle motor 2 to rotate.

In response to an command from the CPU 15, the servo signal processor 9b supplies, to the servo drive circuit 5, the servo drive signals to perform focus searching, track jumping, seeking, etc.

The RF signal, generated by the read channel front end 8b, and analog-to-digital converted by the A/D signal processor 12, is processed by the RF signal processor 9c, and the processed RF signal is then supplied to the disk controller 14.

The disk controller 14 includes an encode/decode unit 14a, an ECC processor 14b, and a host interface 14c.

During playback, the encode/decode unit 14a in the disk controller 14 decodes the data supplied from the RF signal processor 9c. The ECC processor 14b in the disk controller 14 performs an error correction process, thereby producing playback data.

The disk controller 14 extracts, from information acquired in the decode process, subcode information, address information, management information, and additional information, and then supplies these pieces of information to the CPU 15.

Under the control of the CPU 15 that functions as a controller of the disk drive device, the playback data is transferred from the host interface 14c to an external host apparatus 100 (such as a personal computer).

The CPU 15 communicates with the host apparatus 100 via the host interface 14c to exchange the playback data and the read/write commands. In response to the read command from the host apparatus 100, the CPU 15 controls playback on the disk 1, thereby transferring the decoded playback data.

Upon receiving the write command and the record data from the host apparatus 100, the CPU 15 performs a recording operation on the disk 1.

During data recording, the ECC processor 14b attaches an error correction code to the record data supplied from the host apparatus 100 and the resulting data is encoded by the encode/decode unit 14a.

The encoded record data is supplied to the write pulse generator 9a in the digital signal processor 9. The write pulse generator 9a performs processes, such as a waveform shaping process, on the encoded record data, and supplies the resulting data to the APC circuit 3d as laser modulated data.

The APC circuit 3d drives the laser diode 3a in response to the laser modulated data. The laser diode 3a outputs laser in accordance with the record data, thereby writing the record data onto the disk 1.

If the disk 1 is a rewritable disk having a phase change recording layer, the crystal structure of the recording layer changes in response to heat of the laser light beam, and a phase change pit is produced. A variety of data is thus recorded in response to the presence or absence of the pits and the length of each pit. If a laser beam is directed to an existing pit, the crystal structure, changed during the recording of the data, and is reverted to back to the pit-absent state, and the data is thus erased.

### 3. Structure of the ECC block

In the disk 1 of this embodiment, the disk drive device of Fig. 1 sets a 64 Kbyte physical sector as an ECC block, and performs recording and playback accesses on a per ECC block basis.

The file system in the host apparatus 100 issues write command / read command by recognizing 2 Kbytes as one sector. In other words, an emulation is performed.

In the discussion that follows, the 64 Kbyte physical sector as a write unit in the disk drive device is referred to as a "64 K block", and the 2 Kbyte sector handled by the file system in the host apparatus 100 is referred to as a "2 K sector".

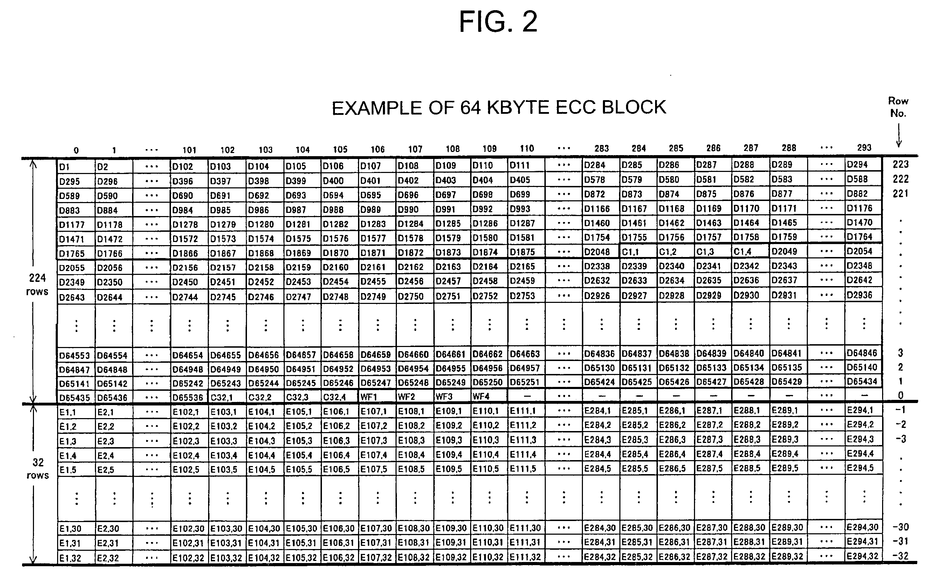

Fig. 2 illustrates the structure of the 64 K block. Here, synchronization data, such as sync and re-sync, is not shown.

As shown, the 64 K block has a size of 294 columns by 256 rows, and main data (user data) D1-D65536 of 64 Kbytes (65536 bytes) are arranged over 224 rows.

In this example, 4 byte CRC check code is attached on a per 2048 byte basis. For example, CRC check codes C1,1, C1,2, C1,3, and C1,4 are attached to the user data D1-D2048.

The user data of 65536 bytes is divided into 32 2048-byte units, and the 2048-byte unit corresponds to the 2 K sector.

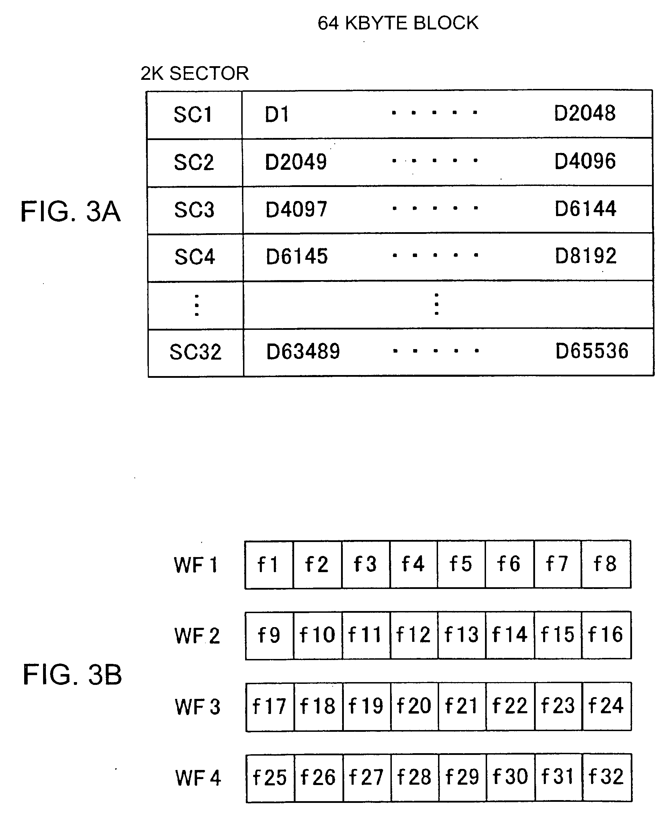

The 32 2-K sectors SC1-SC32 are assigned as shown in Fig. 3A. For example, the user data of the 2-K sector SC1 is D1-D2048, the user of the 2-K sector SC2 is D2049-D4096, ..., the user data of the 2-K sector SC32 is D63489-D65536.

A 4-byte CRC check code is attached to each of the 2-K sectors SC1-SC32.

In the 64-K block of Fig. 2, ECC parities (E1,1, ..., E294,32) on lower 32 rows (Row No. 1 through Row No. 32) are attached in addition to the upper 224 rows (Row No. 0 through Row No. 223). Each column has a 23 byte parity. For example, ECC parities (E1,1, ..., E1,32) are parities for data of 0-th column.

As shown in Row No. 0 of Fig. 2, the user data D63489-D65536 as the 2-K sector SC32, and the CRC check code C32,1, C32,2, C32,3, and C32,4 are shown followed by 4 byte written flags WF1, WF2, WF3, and WF4.

The 4 byte written flags WF1, WF2, WF3, and WF4 have flags f1-f32 of 32 bits as shown in Fig. 3B.

The flags f1-f32 respectively correspond to the 2-K sectors SC1-SC32.

Each of the flags f1-f32 may be "0" for an unrecorded status, and "1" for recorded status. The recorded status means that valid data has been recorded. If invalid data, such as dummy data, is recorded, the flag is "0" (for unrecorded status).

The flags f1-f32 arranged in the 64-K block identify whether valid user data has been "recorded" or "unrecorded" on each of the 2-K sectors SC1-SC32 in the 64-K block.

As shown in Fig. 2, a byte position denoted by a symbol "-" represents an empty area, and FFh data ("11111111") is recorded there, for example.

### 4. Recording and playback operations in WO applications

With the disk drive device of the present embodiment, a rewritable disk is used not only in rewritable applications but also in write-once (WO) applications.

When the rewritable disk is used in the write-once application, it must be guaranteed that the phase-change pit data originally rewritable be inhibited from being rewritten. More specifically, an area having data recorded thereon is physically rewritable, but must be inhibited from being rewritten in operation.

Once data is written on a physical sector of a 64-K block, data writing is inhibited on that 64-K block thereafter.

In an emulation action in which the host apparatus 100 places an access request of 2-K sector unit to the 64-K block write unit, the disk drive device must learn the 2-K sector bearing the user data written thereon in the 64-K block recorded on the disk 1.

More specifically, the disk drive device must recognize whether valid data has been written on each of the 32 2-K sectors within the 64-K block. In the case of a write command to an unrecorded 2-K sector, data of 2-K sector is written on the disk 1 in response to the command. In the case of a write command to a recorded 2-K sector, the disk drive device does not write data to that 2-K sector on the disk 1 in response to that write command.

The host apparatus 100 now issues a read command directed to a certain 2-K sector. The disk drive device recognizes whether valid data has been recorded on that 2-K sector. If the valid data is recorded, the disk drive device transmits the data to the host apparatus 100. If no valid data is recorded, the disk drive device needs to return an error notice. If dummy data has been recorded on the 2-K sector, it is not appropriate that the disk drive device transmits, to the host apparatus 10, the dummy data 0 as being valid data.

When the rewritable disk is applied in the write-once operation in this embodiment, written flags WF1-WF4 are used to correctly recognize the record status of each 2-K sector in the 64-K block.

In response to one of the write command and the read command from the host apparatus 100, the disk drive device references the written flags WF1-WF4, thereby performing an appropriate recording operation or an appropriate playback operation in the write-once application.

Whether to use a physically rewritable disk 1 in the rewritable application or the write-once application is determined beforehand on a disk by disk basis.

In other words, a rewritable disk to be used in the write-once application is manufactured for write-once use only.

For write-once applications, the physical format information simply declares write-once specification. With reference to Fig. 9, the PFI (physical format information) recorded as the ADIP information has been discussed. The disk category/version number in the PFI contains information that indicates whether the disk is for the rewritable application or the write-once application.

Since the ADIP information cannot be physically rewritten, the application type of the disk is fixed at the manufacture of the disk.

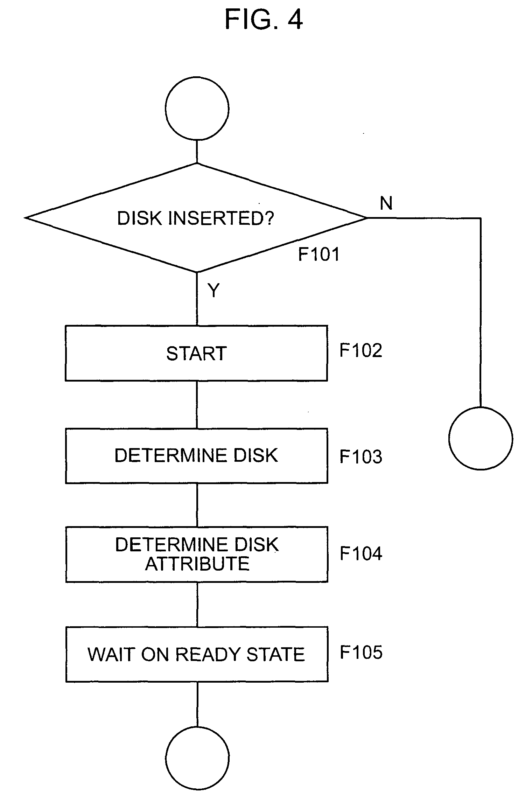

Fig. 4 illustrates a process at a disk loading operation under the control of the CPU 15 in the disk drive device of the present embodiment.

If the disk 1 is loaded, the process proceeds from step F101 to step F102 where the CPU 15 starts up. More specifically, the CPU 15 performs initial operations, including starting spindle motor, stabilizing the RPM of the motor, focus searching, turning on focus servo, turning on tracking servo, reading the management information such as PFI.

In step F103, the CPU 15 capture PFI read as the ADIP information, thereby identifying the disk type. If the loaded disk 1 is a physically rewritable disk, the CPU 15 determines whether the disk 1 is for the rewritable application or the write-once application. In step F014, the CPU 15 checks the attribute of the disk. In step F105, the CPU 15 waits on standby for a command from the host apparatus 100.

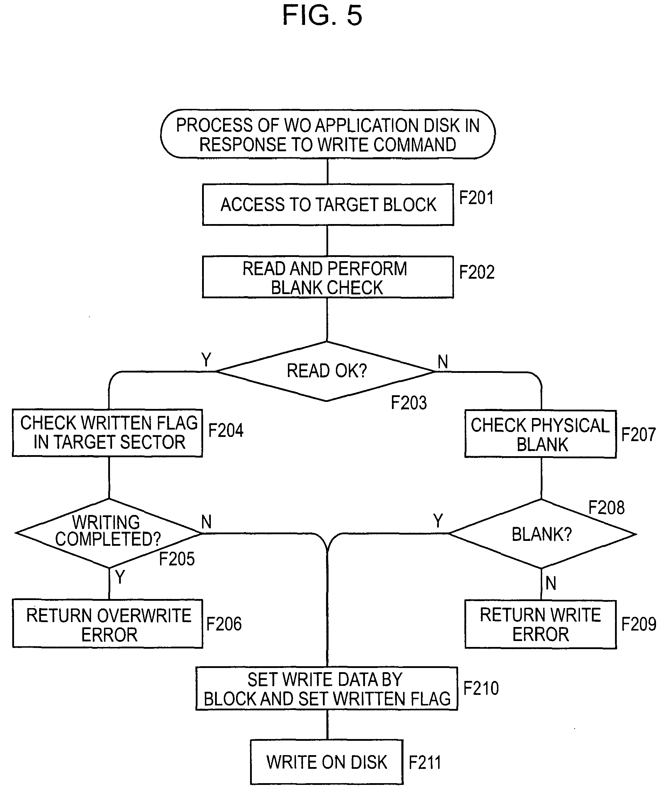

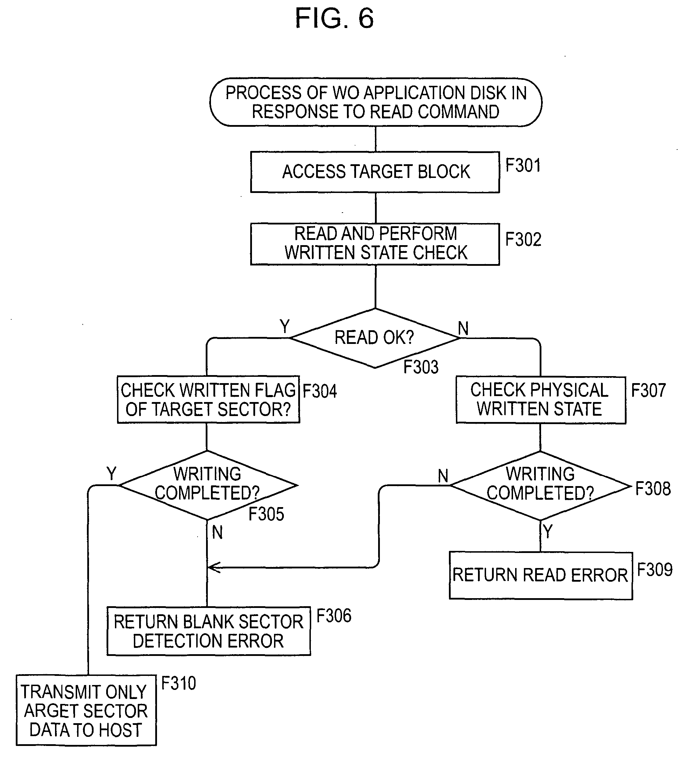

Figs. 5 and 6 illustrate a process of the CPU 15 operating with a write-once disk 1 in response to a command from the host apparatus 100.

Fig. 5 illustrates the process of the CPU 15 in response to a write command supplied by 2-K sector unit from the host apparatus 100.

In response to the write command from the host apparatus 100, the CPU 15 accesses a target 64-K block on the disk 1 in step F201.

In this case, the host apparatus 100 supplies, as the write command, a command content (write instruction), and data of the 2-K sector unit, and the address information thereof (for example, a write start address and a data length thereof). The CPU 15 determines from the address information the 64-K block containing the 2-K sector, and causes the optical pickup 3 to access the address of the 64-K block on the disk 1.

During accessing and data transfer in response to the write command and read command, a logical address handled by the host apparatus 100 is converted into a physical address on the disk 1. This step is a known technique, and is not further detailed here.

Upon reaching the target 64-K block, the CPU 15 reads the 64-K block in step F202 to determine whether the data recorded there is appropriately reproducible. The CPU 15 also performs a blank check. The blank check is to detect the presence or absence of a playback RF signal during reading, in other words, to determine whether the zone is recorded or blank. The RF signal processor 9c performs the blank check by detecting an envelope of the RF signal. The recorded/unrecorded status determined in the blank check becomes information indicating whether or not data has been written. For example, if an RF signal higher than a predetermined level is obtained from a zone bearing the dummy data recorded thereon, the zone is determined as being in the recorded state. As a result, the results of the blank check cannot be directly used for the determination of the write-once application.

If the data reading is normally performed in the playback process in step F202, in other words, if the results of the decoding of the read data and error correction are normal, the CPU 15 determines the results as being "read OK", thereby proceeding from step F203 to step F204.

If the results of data reading are not normal, the CPU 15 determines the results as being "read NG", thereby proceeding from step F203 to step F207. Even if the result is "read NG", the determination is typically performed by a predetermined number of times. The CPU 15 thus determines the results as being "read NG" in step F203 after failing to read through the predetermined number of attempts.

In step F207 as a result of read NG, the CPU 15 checks the physical blank. The physical blank check is performed to check whether the entire area of the 64-K block has no data written thereon at all. If it is determined in step F202 that no RF signal is detected at all, the CPU 15 determines that the entire area of the 64-K block is in a blank state that has never been selected as a target for a recording operation. At this point of time, data reading may be performed again to check the physical blank.

If the 64-K block is not in the physical blank, in other words, if any RF signal is detected, the data reading is not properly performed from the zone of the 64-K block regardless of past data writing there. This is not a normal state. The CPU 15 thus determines that the 64-K block is not appropriate zone for data writing in response to the write command, and proceeds to step F209 to transmit an error notice to the host apparatus 100. More specifically, the CPU 15 determines that correct data writing cannot be performed, and transmits a write error notice to the host apparatus 100.

If the CPU 15 determines in step F208 that the zone is in the physical blank, writing data in response to the write command is to be performed without any problem. The CPU 15 then proceeds to step F210.

In step F210, the CPU 15 sets write data by block, and sets the written flag. In step F211, the CPU 15 performs data writing to the corresponding block in the disk 1.

It is now assumed that the host apparatus 100 has issued the write command to a front-end 2-K sector SC1 in a given 64-K block and that the physical blank is confirmed in step F208. In other words, the CPU 15 is requested to write data onto the 2-K sector SC1 in one of the unrecorded 64-K blocks.

In this case, the CPU 15 transfers the user data of the 2-K sector SC1 supplied from the host apparatus 100 and dummy data intended for remaining 2-K sectors SC2-SC32 to the encode/decode unit 14a to assign these data to data D1-D65536. The CPU 15 also transfers data as flag f1 corresponding to the 2-K sector SC1 as "1" for the written flags WF1-WF4 to the encode/decode unit 14a.

In response to these data, the ECC processor 14b sets error correction codes (ECC parities (E1,1, ..., E294,32)).

As shown in Fig. 2, the write data of the 64-K block is generated. The write data is encoded by the encode/decode unit 14a for predetermined recording, and is then supplied to the write pulse generator 9a. The write pulse generator 9a supplies, to the APC circuit 3d, a write pulse responsive to the write data. The writing of the corresponding 64-K block is thus written on the disk 1.

The read OK result in the determination, in step F203, responsive to the input of the write command means that valid user data written in the past is present in the 64-K block.

Since the disk 1 is for the write-once application, the current write command must be checked as the one not for the data writing. The CPU 15 checks the written flags WF1-WF4 out of the data read in step F202. The CPU 15 thus determines whether the 2-K sector responsive to the current write command is a sector bearing valid data written thereon in the past.

It is assumed that the 2-K sectors SC1 and SC4 of the 64-K block as the current target bear valid data recorded thereon. In the written flags WF1-WF4, flags f1 and f4 are respectively "1".

If the 2-K sector responsive to the current write command is the 2-K sector SC1, the CPU 15 checks the flag f1 to learn that recording has been completed on the 2-K sector SC1. This means that the host apparatus 100 requests the disk drive device to rewrite the 2-K sector SC1. Since the disk 1 is for the write-once application, the CPU 15 cannot accept the request. The CPU 15 proceeds to step F206. The CPU 15 transmits, to the host apparatus 100, an error notice to the effect that the write-once application inhibits overwriting. This process guarantees the operation of the write-once application that permits no data rewriting.

For example, the 2-K sector responsive to the current write command is the 2-K sector SC3 with the 2-K sectors SC1 and SC4 bearing valid data as described above. The CPU 15 checks the flag f3 and learns that the 2-K sector SC3 is unrecorded. In this case, the CPU 15 performs data writing in response to the write command.

The CPU 15 proceeds to step F210 to set the write data by block, and the written flags. In step F211, the CPU 15 causes the disk drive device to write the data onto the corresponding block.

For example, the CPU 15 transfers the data to the encode/decode unit 14a to set the user data of the 2-K sector SC3 supplied from the host apparatus 100, the user data of the 2-K sectors SC1 and SC4 read from the disk 1, and dummy data assigned to the remaining 2-K sectors SC2, and SC5-SC32 to data D1-D65536. Data with the flag 3 updated to "1" corresponding to the 2-K sector SC3 to be newly written as the written flags WF1-WF4 is supplied to the encode/decode unit 14a.

The ECC processor 14b sets the error correction code (ECC parities (E1,1, ... E294,32)) to these data.

The write data of the 64-K block of Fig. 2 is thus generated. The write data is encoded by the encode/decode unit 14a for predetermined recording, and is then supplied to the write pulse generator 9a. The write pulse generator 9a supplies, to the APC circuit 3d, a write pulse responsive to the write data. The APC circuit 3d thus writes the data to the 64-K block.

The disk drive device thus performs the process responsive to the write command as described above. Write-once type data is thus appropriately written on the write-once application disk 1. Upon checking the written flags WF1-WF4, the CPU 15 easily and correctly determines whether the writing requested by the host apparatus 100 is for data rewriting or new writing. An appropriate write-once type recording is thus performed.

As a result, the rewritable disk for the write-once application maintains write-once feature that inhibits data from being recorded (written) on a recorded zone. The rewritable disk for the write-once application is thus used as a disk that has a data update disabled feature and is used as an ordinary write-once disk.

The process of the disk drive device, with the disk 1 for the write-once application loaded in, in response to the read command of the 2-K sector unit from the host apparatus 100 is described below with reference to Fig. 6.

In response to the read command from the host apparatus 100, the CPU 15 accesses a target 64-K block on the disk 1 in step F301.

The disk drive device receives, as the read command, a command content (read instruction), and address information for reading (for example, a read start address and a length of data). The CPU 15 determines, from the address information, the 64-K block containing a current 2-K sector. The CPU 15 causes the optical pickup 3 to access an address of the corresponding 64-K block on the disk 1.

Upon reaching the target 64-K block, the CPU 15 performs a read operation to the target 64-K block in step F302. The CPU 15 also performs a written status check. In the written status check, as in the blank check, the CPU 15 checks the presence or absence of the playback RF signal during reading. The written status check is a process to determine whether a zone of interest bears data recorded thereon or is blank.

If it is determined in step F302 that data reading is normally performed, in other words, if the results of decoding of the read data and error correction are normal, the answer to the read OK determination in step S303 is yes, and the CPU 15 proceeds to step F304.

If the results of data reading are not normal, the CPU 15 determines the results as being "read NG", thereby proceeding from step F303 to step F307. Even if the result is "read NG", the determination is typically performed by a predetermined number of times. The CPU 15 thus determines the results as being "read NG" in step F303 after failing to read through the predetermined number of attempts.

In step F307 as a result of read NG, the CPU 15 checks a physical written state. As the physical blank check, the physical written state check is performed to check whether the entire area of the 64-K block has no data written thereon at all.

If it is determined in step F302 that no RF signal is detected at all, the CPU 15 determines that the entire area of the 64-K block is in a physical blank state that has no data recorded thereon.

In the physical blank state, namely, without any data recorded, the current read command is intended to read a blank area, and data transfer to the host apparatus 100 cannot be performed. The CPU 15 proceeds to step F306 to transmit, to the host apparatus 100, an error notice to the effect that the requested sector is a blank sector and cannot be read.

If it is determined in step F308 that the 64-K block is in a written state, namely, partially or entirely written with data, the "read NG" is output for some reason although data is recorded. The CPU 15 proceeds to step F309 to transmit, to the host apparatus 100, an error notice to the effect that data reading cannot be performed due to the read error.

If the read OK determination in step F303 responsive to the read command is yes, the CPU 15 checks the written flags WF1-WF4 of the read data in step F304. The CPU 15 then checks that the 2-K sector responsive to the read command is a sector bearing valid data recorded thereon.

For example, if the 2-K sectors SC1, SC3, and SC4 of the 64-K block as a current target bear valid data written thereon, flags f1, f3, and f4 are "1" in the written flags WF1-WF4.

If the 2-K sector responsive to the current write command is the 2-K sector SC2, the CPU 15 checks the flag f2 to learn that the 2-K sector SC2 is unrecorded (with dummy data recorded thereon). This means that the host apparatus 100 requests the disk drive device to read a 2-K sector having no data recorded thereon. Data reading responsive to such a request is impossible, and the CPU 15 proceeds to step F306. The CPU 15 transmits, to the host apparatus 100, an error notice to the effect that the requested sector is a blank sector and cannot be read.

It is now assumed that the 2-K sectors SC1, SC3, and SC4 bear valid data recorded thereon, and that the 2-K sector responsive to the current read command is the 2-K sector SC3. The CPU 15 checks the flag f3 and learns that the 2-K sector SC3 bears valid data recorded thereon. In this case, data transfer is performed in response to the read command.

The CPU 15 proceeds to step F310. The CPU 15 transmits, from the host interface 14c to the host apparatus 100, only the data of the 2-K sector SC3 as a target of the read command, of the data read in step F302.

By performing the above-referenced process, the disk drive device carries out an appropriate playback operation (a data transfer operation to transfer data to the host apparatus 100) on the rewritable disk for the write-once application.

More specifically, dummy data is recorded on an unrecorded area to perform data writing by the 64-K block unit when the data of 2-K sector requested in an emulation is written. The detection of the RF signal during the playback does not help the CPU 15 precisely determine the unrecorded sector of the 64-K block (with valid data unrecorded).

In accordance with the present embodiment, the CPU 15 checks the written flags WF1-WF4, thereby precisely and easily determining whether the 2-K sector responsive to the read request bears the valid data written thereon. The CPU 15 thus transmits the appropriate data to the host apparatus 100. The disk drive device is free from an erroneous operation such as mistakenly transmitting the dummy data as the valid data.

Even if the write-once type recording compatible with the emulation is performed on the rewritable disk for the write-once application, appropriate playback output is obtained in response to the read request.

### 5. Modifications

In the above-referenced embodiment, the emulation process of the 2-K sector unit is performed on the 64-K block write unit as shown in Fig. 2. The present invention is not limited to such a system.

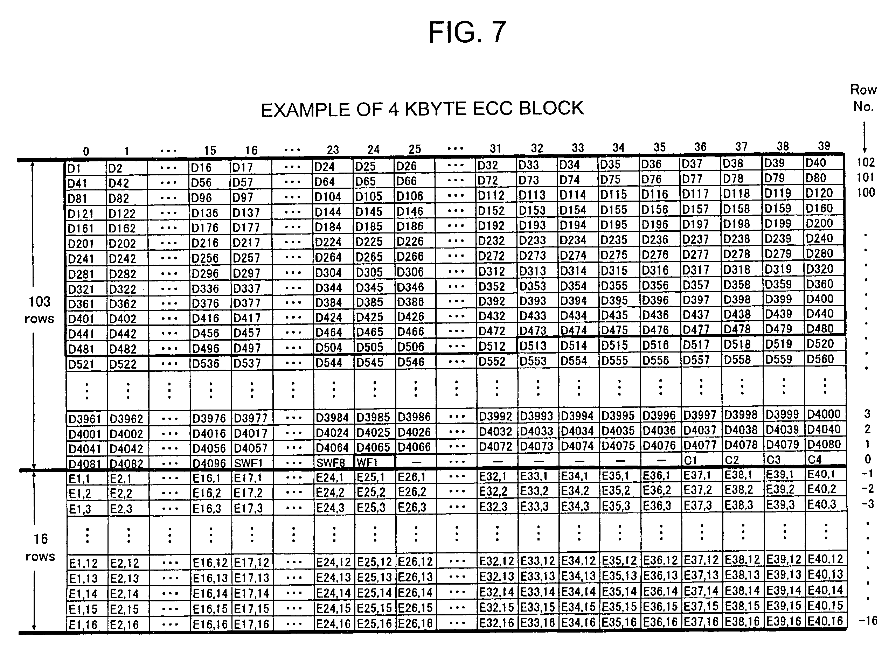

Fig. 7 illustrates another example. The disk drive device uses, as the write unit, the ECC block of the 4 Kbyte physical sector, and the host apparatus 100 uses a 512 byte sector.

The ECC block of Fig. 7 contains 4096 bytes (4 Kbytes) of the user data D1-D4096. Synchronization data, such as sync and re-sync are not shown here.

As shown, the 4 K block has a size of 40 columns by 119 rows, and main data (user data) D1-D4096 of 4 Kbytes are arranged over 103 rows.

In this example, 4 byte CRC check codes C1, C2, C3, and C4 are attached to the 4 Kbyte user data.

The user data of 4096 bytes is divided into 8 512-byte units, and the 512-byte unit corresponds to one sector in the host apparatus 100.

ECC parities (E1,1, ..., E40,16) on lower 16 rows (Row No. 1 through Row No. 16) are attached in addition to the upper 103 rows (Row No. 0 through Row No. 102). Each column has a 16 byte parity. For example, ECC parities (E1,1, ..., E1,16) are parities for data of 0-th column.

As shown in Row No. 0 of Fig. 7, one byte written flag WF1 is arranged.

The one byte written flag WF1, composed of eight bits, serves as a flag for eight sectors, each sector having a 512 byte unit.

When an emulation of a 512 byte unit is performed to a 4-K block, the same operation as described above is performed by arranging the written flag WF1 to the eight 512-byte sectors.

With the written flag corresponding to the sectors, each sector corresponding to an emulation process unit, prepared in the block, the present invention is applied regardless of the sizes of the block and the sector.

In accordance with the above-referenced embodiment, type identification, discriminating between the rewritable application and the write-once application, in playback only information is recorded on the disk 1 as the ADIP information. This means that each of rewritable disks having a physical phase change recording layer is set up for the rewritable application or the write-once application, and that once the rewritable disk is set for the write-once application the disk cannot be changed to the rewritable application.

Since the application of the disk is fixed on a per disk basis, the application of the disk is clearly identified. The ease of use is assured. If a disk once set for the rewritable application is updated, appropriate recording and playback can still be assured.

In view of the above described points, it is preferred that the type identification discriminating between the rewritable application and the write-once application is appropriately recorded as unmodifiable information. The present invention is not limited to using the ADIP information. For example, some disk media has management information and physical information in an emboss pit area formed beforehand. I such media, the type identification discriminating between the rewritable application and the write-once application may be recorded as emboss pit information.

The disk drive device of the present embodiment is a recording and playback apparatus for the disk 1. The present invention is applicable to any of a playback only apparatus and a recording only apparatus. More specifically, the present invention is embodied as each of a playback apparatus performing the process of Fig. 6 and a recording apparatus performing the process of Fig. 5.

## Claims

1. A recording medium having a recording layer in a data rewritable physical structure set in a write-once mode that permits data to be written one time only, the recording medium comprising, in a data structure recorded onto the recording layer, a second data unit, as a write unit, containing a plurality of first data units with each first data unit containing main data of a predetermined number of bytes, and flag information representing whether the recording of the first data unit is complete.

2. The recording medium according to claim 1, wherein type information, recorded as physically unrewritable playback only information, identifies that the recording medium indicates a write once only mode.

3. The recording medium according to claim 1, wherein the second data unit is an error correction block unit including the plurality of first data units, the flag information corresponding to each first data unit, and error correction information.

4. A recording apparatus for a recording medium having a recording layer in a data rewritable physical structure set in a write-once mode that permits data to be written one time only, the recording medium comprising, in a data structure recorded onto the recording layer, a second data unit, as a write unit, containing a plurality of first data units with each first data unit containing main data of a predetermined number of bytes, and flag information representing whether the recording of the first data unit is complete, comprising:
write means for writing data onto the recording medium according to the second data unit,
determining means for checking the flag information in response to a write request to write the main data according to the first data unit in order to determine whether a zone of the first data unit responsive to the write request has data recorded thereon, and
record control means for generating write data of the second data unit having the flag information thereof updated, the second data unit containing the first data unit responsive to the write request, and controlling the write means to write the data if the determining means determines that the zone of the first data unit responsive to the write request remains unrecorded, or for controlling the write means not to write the data in response to the write request if the determining means determines that the zone of the first data unit responsive to the write request has data recorded thereon.

5. The recording apparatus according to claim 4, wherein the second data unit is an error correction block unit including the plurality of first data units, the flag information corresponding to each first data unit, and error correction information, and
wherein when a data write operation is performed in response to the write request as a result of determination that the zone of the first data unit responsive to the write request remains unrecorded, the record control means generates the write data of the second data unit containing
the main data of the first data unit responsive to the write request,
main data recorded according to the first data unit within the second data unit,
dummy data to be recorded in the zone of the first data unit unrecorded within the second data unit, and
the flag information updated to indicate that the first data unit responsive to the write request is recorded, and
error correction data, and
then causes the write means to perform data writing.

6. A playback apparatus for a recording medium having a recording layer in a data rewritable physical structure set in a write-once mode that permits data to be written one time only, the recording medium comprising, in a data structure recorded onto the recording layer, a second data unit, as a write unit, containing a plurality of first data units with each first data unit containing main data of a predetermined number of bytes, and flag information representing whether the recording of the first data unit is complete, comprising:
read means for reading data from the recording medium,
determining means for checking the flag information in response to a read request to read the main data according to the first data unit in order to determine whether a zone of the first data unit responsive to the read request has data recorded thereon, and
playback control means for playing back and outputting data of the first data unit responsive to the read request if the determining means determines that the zone of the first data unit responsive to the read request has data recorded thereon, or for controlling the read means not to perform the playback and output process responsive to the read request if the determining means determines that the zone of the first data unit responsive to the write request remains unrecorded.

7. A recording method of a recording medium having a recording layer in a data rewritable physical structure set in a write-once mode that permits data to be written one time only, the recording medium comprising, in a data structure recorded onto the recording layer, a second data unit, as a write unit, containing a plurality of first data units with each first data unit containing main data of a predetermined number of bytes, and flag information representing whether the recording of the first data unit is complete, comprising:
a determination step of checking the flag information in response to a write request of main data of the first data unit in order to determine whether a zone of the first data unit responsive to the write request has data recorded thereon, and
a write step of performing data writing by generating write data of the second data unit with the flag information thereof updated, containing the first data unit responsive to the write request if it is determined in the determination step that the zone of the first data unit responsive to the write request remains unrecorded, or
an error processing step of performing an error process without the write step of data being performed if it is determined in the determination step that the zone of the first data unit responsive to the write request has data recorded thereon.

8. A playback method of a recording medium having a recording layer in a data rewritable physical structure set in a write-once mode that permits data to be written one time only, the recording medium comprising, in a data structure recorded onto the recording layer, a second data unit, as a write unit, containing a plurality of first data units with each first data unit containing main data of a predetermined number of bytes, and flag information representing whether the recording of the first data unit is complete, comprising:
a determination step of checking the flag information in response to a read request of main data of the first data unit in order to determine whether a zone of the first data unit responsive to the read request has data recorded thereon, and
a playback and output step of playing back and outputting data of the first data unit responsive to the read request if it is determined in the determination step that the zone of the first data unit responsive to the read request has data recorded thereon, or
an error processing step of performing an error process without the playback and output step being performed if it is determined in the determination step that the zone of the first data unit responsive to the write request remains unrecorded.
